# EUROPÄISCHE PATENTSCHRIFT

(11) **EP 0 671 452 B1**
(45) Veröffentlichungstag und Bekanntmachung des Hinweises auf die Patenterteilung: **29.04.1998**
(21) Anmeldenummer: 95100197.3
(22) Anmeldetag: 09.01.1995
(51) Int. Cl.: C09K 3/10, C09K 21/04, C04B 35/63, C04B 28/00

(54) **Rauchgasarme, temperaturbeständige Binde- und Beschichtungsmittel und deren Verwendung**
Temperature-resistant, low-fuming coating and binding agent, and use thereof
Agent liant et d'enrobage, résistant à la température avec faible dégagement de fumée et son utilisation

(30) Priorität: 21.01.1994 DE 4401636
(43) Veröffentlichungstag der Anmeldung: 13.09.1995
(73) Patentinhaber: BAYER AG, 51368 Leverkusen (DE)
(72) Erfinder: von Bonin, Wulf, Dr., D-51519 Odenthal (DE); Jabs, Gert, Dr., D-51519 Odenthal (DE)

(56) Entgegenhaltungen:
- EP-A- 0 217 080
- EP-A- 0 527 401
- EP-A- 0 542 022
- DE-A- 3 506 132
- DE-A- 4 140 966
- Römpp Chemie Lexikon, 9. Aufl.,Georg Thieme Verlag,1990,S.2236,2237

## Beschreibung

Die vorliegende Erfindung betrifft rauchgasarme, temperaturbeständige Binde- und Beschichtungsmittel aus wäßrigen Solen von Kieselsäure, deren Kieselsäure Teilchen mit spezifischen Oberflächen, bestimmt nach BET-Methode, von 50 bis 500 m²/g aufweisen, und Ammonium-, Hydrazin-, primäre, sekundäre oder tertiäre wasserlösliche Amin- oder aliphatische Alkanolaminsalze saurer Metallphosphate sowie deren Verwendung.

Aus EP 0 527 401 sind Brandschutzgele, deren Herstellung sowie deren Verwendung für Brandschutzverglasungen bekannt, die Aminsalze saurer Phosphate, eine Aluminiumkomponente, eine Phosphorkomponente, eine Aminkomponente und gegebenenfalls Wasser in solchen Mengenverhältnissen enthalten, daß sie bei 5 bis 30°C für mehr als 24 Stunden eine fließfähige Mischung bilden und beim Erhitzen auf Temperaturen über 45°C in weniger als 24 Stunden in ein durchsichtiges Gel übergehen. Vor der Gelierung kann als Füllstoff beispielsweise Kieselsäure als Feststoff zugegeben werden.

Aus EP 0 654 517, die als Stand der Technik gemäß Art. 54.(3) EPÜ zu werten ist, sind Umsetzungsprodukte aus einer Aluminiumverbindung, einer Bor enthaltenden Säure, einer Phosphor enthaltenden Säure und eines Amins bekannt, die gegebenenfalls bis zu 30 Mol Wasser pro Mol eingesetzter Aluminiumverbindung enthalten und als Füllstoff feste Kieselsäuren enthalten.

Wäßrige Sole kolloidaler Kieselsäure sind seit langem bekannt. Diese Sole werden bisweilen als Binde- oder Beschichtungsmittel eingesetzt, obwohl sie beim Trocknungsvorgang nicht filmbildend wirken, welches ein großer Nachteil ist. Der Vorteil der verwendeten kolloidalen Kieselsäure ist, daß sie temperaturstabil ist, so daß eine gegen hohe Temperaturen resistente Schicht damit hergestellt werden könnte. Da wäßrige Kieselsäuresole wie allgemein bekannt jedoch elektrolytempfindlich sind und bei schon geringen Mengen an zugesetzten Elektrolyten z.B. ausflocken, wurde der Einsatz von kolloidaler Kieselsäure, insbesondere zur Beschichtung oder als Bindemittel nur in Ausnahmefällen unter bestimmten Bedingungen erwogen.

Aufgabe war es daher, Kieselsäuresysteme zur Verfügung zu stellen, die als Bindemittel oder zur Beschichtung Verwendung finden, wobei diese Systeme nicht nur temperaturbeständig, sondern auch filmbildend und rauchgasarm sind.

Überraschenderweise konnte diese Aufgabe mit wäßrigen, gegebenenfalls kolloidalen Kieselsäuresolen, deren Kieselsäure Teilchen mit spezifischen Oberflächen bestimmt nach BET-Methode von 50 bis 500 m²/g aufweisen, gelöst werden, die zusätzlich Ammonium-, Hydrazin-, primäre, sekundäre oder tertiäre wasserlösliche Amin- oder aliphatische Alkanolaminsalze saurer Metallphosphate oder Aminsalze saurer Metallphosphate und Aminsalze der Borsäure enthalten. Trotz dieses Elektrolyt-Zusatzes wird keine Ausflockung beobachtet. Man erhält stabile niederviskose Mischungen, die filmbildende Eigenschaften aufweisen und zudem klar auftrocknen.

Gegenstand der Erfindung sind filmbildende, lagerstabile, klar auftrocknende Binde- und Beschichtungsmittel, erhältlich durch Vermischen
i) wäßriger Sole kolloidaler Kieselsäuren, deren Kieselsäure spezifische Oberflächen bestimmt nach der BET-Methode von 50 bis 500 m²/g aufweisen mit
ii) vorgelegten wäßrigen Lösungen von Ammonium-, Hydrazin-, primären, sekundären oder tertiären, wasserlöslichen Amin- oder aliphatischen Alkanolaminsalzen saurer Metallphosphate oder von Gemischen dieser Salze mit Borsäure.
Eingesetzt werden wäßrige Kieselsäuresole mit spezifischen Oberflächen der Teilchen (bestimmt nach der BET-Methode und der Methode von G.N.Sears, Analytical Chemistry Vol. 28, N. 12, 1981-1983, Dezember 1959) von 50 bis 500 m²/g, bevorzugt von 100 bis 300 m²/g, und mit Feststoffkonzentrationen von 10 bis 55 Gew.-%, vorzugsweise 20 bis 45 Gew.-%.

Bevorzugt werden Alkanolaminsalze, besonders bevorzugt Mono- und/oder Polyethanolaminsalze der Borsäure und saurer Metallphosphate eingesetzt.

Saure Phosphate von Metallen der 2. und 3. Hauptgruppe sowie der zweiten Nebengruppe des Periodensystems der Elemente, insbesondere Mg, Ca, B, Al, Zn sind bevorzugt. Die sauren Phosphate der Metalle haben im allgemeinen pH-Werte unter 6.

Besonders bevorzugt sind wäßrige Lösungen von Alkanolaminsalzen der sauren Phosphate des Aluminiums, gegebenenfalls in Kombination mit Alkanolaminsalzen der Borsäure, deren pH-Werte etwa bei 7 (6,5 bis 7,5) liegen.

Die Binde- und Beschichtungsmittel enthalten bevorzugt Gemische aus Aminsalzen der Borsäure und saurer Metallphosphate in einem atomaren Verhältnis von Metall, vorzugsweise Aluminium, zu Bor wie 1:0 bis 1:12, vorzugsweise wie 1:0,1 bis 1:6.

Ein weiterer Gegenstand der Erfindung ist ein Verfahren zur Herstellung der erfinerfindungsgemäßen Binde- und Beschichtungsmittel, welches dadurch gekennzeichnet ist, daß wäßrige Kieselsäuresole intensiv mit vorzugsweise vorgelegten, wäßrigen, 25- bis 85-gew.-%igen Lösungen aus Ammonium-, Hydrazin-, primären, sekundären oder tertiären wasserlöslichen Amin- oder aliphatischen Alkanolaminsalzen saurer Metallphosphate oder einem Gemisch dieser Salze mit Borsäure vermischt werden.

Vorzugsweise weisen die verwendeten wäßrigen Lösungen der Ammonium-, Hydrazin-, primäre, sekundäre oder tertiäre wasserlösliche Amin- oder aliphatische Alkanolaminsalze der sauren Metallphosphate einen pH-Wert zwischen 5 und 8, insbesondere zwischen 6 und 7,5 auf.

Die wäßrigen Kieselsäuresole mit spezifischen Oberflächen der Teilchen von 50 bis 500 m²/g, bevorzugt von 100 bis 300 m²/g, und mit Konzentrationen von 10 bis 55 Gew.-% Feststoff, insbesondere 20 bis 45 Gew.-%, werden vorzugsweise bei 3°C bis 100°C, insbesondere bei 10°C bis 40°C, in die wäßrigen Lösungen der Ammonium-, Hydrazin-, primäre, sekundäre oder tertiäre wasserlösliche Amin- oder aliphatische Alkanolaminsalze der sauren Metallphosphate oder in die wäßrigen Lösungen dieser Salze mit Borsäure eingemischt.

Bevorzugt sind 45 bis 80 gew.-%ige wäßrige Lösungen von Alkanolaminsalzen saurer Metallphosphate oder von Gemischen aus Alkanolaminsalzen saurer Metallphosphate und der Borsäure.

Die erfindungsgemäßen wäßrigen Binde- und Beschichtungsmittel werden als Klebstoff bzw. Binde-, Tränk-, Imprägnier- oder Beschichtungsmittel für faserige, kugelige, plättchen-, hantel-, kristall- oder pulverförmige, massive oder poröse, stückige, hohlkörperartige, schaumstoffartige oder flächige, organische, anorganische oder mineralische Teilchen oder Teile verwendet.

Die erfindungsgemäßen wäßrigen Binde- oder Beschichtungsmittel werden auch als Binder zur Herstellung von gegebenenfalls verdichteten bzw. gepreßten Formteilen aus o. g. Teilchen verwendet, wobei die Formteile anschließend getrocknet und gegebenenfalls nacherhitzt (z.B. bei Temperaturen von 80 bis 1100°C, vorzugsweise 150°C bis 700°C) werden können.

Besonders bevorzugt werden die erfindungsgemäßen Binde- und Beschichtungsmittel als Binder für expandierbare oder expandierte Teilchen aus Metallen, Kohle, Graphit, blähfähigem Graphit, Ton, Perlit, Vermikulit, Glas, Glimmer, Borsilikat, Holz, Kork, Fruchtkörnern, Fruchtschalen, Stärkeprodukten, Eiweißprodukten oder synthetischen Cellulosezubereitungen verwendet.

Die mit den erfindungsgemäßen Binde- und Beschichtungsmitteln modifizierten Teilchen bzw. die daraus hergestellten Formkörper finden im Brandschutz, beim Maschinen- und Apparatebau, im Hoch- und Tiefbau, bei der Isolierung und Wartung von Wärmeleitungen und Stromleitungen und bei der Abschirmung elektromagnetischer Effekte Anwendung.

Die erfindungsgemäßen wäßrigen Binde- und Beschichtungsmittel haben den Vorteil, daß sie auch bei sehr hohen Temperaturen bis 1200°C eingesetzt werden können, gleichzeitig gute filmbildende Eigenschaften aufweisen und überraschenderweise trotz hoher Konzentrationen nicht ausflocken.

Als wäßrige Kieselsäuresole werden handelsübliche Kieselsäuresole eingesetzt. Diese werden im allgemeinen durch Austauscherbehandlung von verdünnten Alkalisilikatlösungen hergestellt und weisen je nach Verfahrensdurchführung Teilchen-Oberflächen von 50 bis 500 m²/g auf und liegen in Konzentrationen von 10 bis 50 Gew.-% vor. Der pH-Wert dieser Sole liegt bei 7 bis 8.

Als saure Metallphosphate werden vorzugsweise saure Salze der Orthophosphorsäure eingesetzt; es können aber auch Pyro- oder Polyphosphate und sonstige saure Salze mehrwertiger Säuren des Phosphors und Gemische verschiedener Phosphorsäuren verwendet werden.

Vorzugsweise handelt es sich bei den sauren Metallphosphaten um saure Orthophosphate des Aluminiums. Sie werden beispielsweise erhalten, indem man 1 Mol Aluminiumhydroxyd mit mehr als einem Mol Orthophosphorsäure, vorzugsweise mit 1,5 bis 3 Mol Phosphorsäure umsetzt.

Wenngleich auch ohne die Mitverwendung von Aminsalzen der Borsäure gearbeitet werden kann, werden diese jedoch vorzugsweise mitverwendet, da sie im Falle einer späteren, bei hohen Temperaturen in den erfindungsgemäßen Bindemitteln ablaufenden Reaktion, durch Bildung von Borphosphaten die Stabilität und Neutralität der Bindung verbessern können. Aus stöchiometrischer Sicht werden bevorzugt pro Atom Aluminium 0 bis 12, besonders bevorzugt 0,1 bis 6 Atome Bor eingesetzt.

Bevorzugt findet Orthoborsäure (B(OH)₃) Verwendung; es kommen aber auch Boroxyde sowie deren Hydrationsprodukte und sonstige Borverbindungen in Betracht, aus denen sich in wäßrigem Milieu Borsäuren bilden können.

Als Amine, gegebenenfalls Amingemische, kommen neben Ammoniak und Hydrazin prinzipiell alle wasserlöslichen Amine in Betracht. Vorzugsweise werden jedoch aliphatische Alkanolamine eingesetzt, wie sie beispielsweise durch Umsetzung von Ammoniak oder primären oder sekundären Aminen mit Epoxyden, z.B. Propylenoxyd oder Ethylenoxyd, dem Stand der Technik gemäß, zugänglich sind. Diese Alkanolamine können primär, sekundär oder tertiär sein, z.B. Mono-, Di- oder Tripropanolamin oder -ethanolamin, besonders bevorzugt als Amin ist Monoethanolamin.

Man stellt o.g. Aminsalzlösungen zweckmäßigerweise so her, daß man zunächst die Borsäure, gegebenenfalls in Anwesenheit von Wasser, mit der gesamten zum Einsatz zu bringenden Aminmenge unter Auflösung umsetzt und dann diese aminische Lösung ihrerseits mit der wäßrigen Lösung des sauren Metallphosphats bei ca. 10°C bis 120°C, vorzugsweise 30°C bis 100°C unter guter Vermischung umsetzt, wobei eine klare Lösung entsteht, die auch beim Auftrocknen klar bleibt. Die Aminmenge wird so bemessen, daß die wäßrige Aminsalzlösung bei Raumtemperatur einen pH-Wert von 5 bis 8, vorzugsweise von 6,5 bis 7,5, insbesonders bei 7 aufweist. Solche, insbesondere borhaltige Lösungen mit Feststoffgehalten von 25 bis 85 Gew.-%, vorzugsweise von 45 bis 80 Gew.-%, zeichnen sich durch eine gute Lagerstabilität aus.

Die Kombination der Kieselsäuresole mit den Aminsalzlösungen wird zweckmäßigerweise so durchgeführt, daß man die Aminsalzlösung bei 3°C bis 100°C vorlegt und unter intensiver Durchmischung das Kieselsol hinzufügt.

Es entsteht eine stabile, leicht opake Zubereitung, deren Feststoffgehalt bevorzugt zwischen 20 und 70 Gew.-%, insbesondere zwischen 30 und 70 Gew.-% eingestellt wird. Der SiO₂-Gehalt am Feststoff beträgt vorzugsweise 0,1 bis 80 Gew.-%, insbesondere 20 bis 60 Gew.-%. Die so erhaltenen Lösungen, insbesondere wenn Kieselsole mit Teilchen-Oberflächen über 150 m²/g verwendet werden, trocknen zumeist wasserklar und filmbildend auf.

Vielfach haben die bei 20°C bis 150°C aufgetrockneten Mittel, insbesondere wenn die SiO₂-Gehalte unter 60 Gew.-% liegen, zwischen ca. 120°C und 200°C thermoplastisch verformbaren Charakter, so daß sich aus ihnen auch massive und/oder porige Formteile mit glasartigem Charakter durch Verpressen oder Extrusion herstellen lassen.

Die erfindungsgemäßen Binde- und Beschichtungsmittel werden beim Erhitzen auf über ca. 200°C, vorzugsweise über 250°C, wasserunlöslich und schmelzen dann auch bei Temperaturen bis 1100°C nicht, sondern können lediglich im Temperaturbereich bis etwa 300°C noch etwas erweichen.

Wenn man Pulver bzw. Granulate aus den bei Raumtemperatur bis ca. 200°C getrockneten Bindemitteln schnell auf Temperaturen über 250°C, vorzugsweise auf 350°C bis 900°C erhitzt bzw. Flammengasen aussetzt, werden infolge erheblicher Intumeszenz Schaumteilchen bzw. Hohlperlen gebildet, die sich z.B. zu Stoßabsorptions-, insbesondere aber zu Isolationszwecken und Brandschutzzwecken verwenden lassen, da sie nur geringe Brandlasten aufweisen.

Auf Grund des intumeszenten Verhaltens werden daher die erfindungsgemäßen Mittel z.B.
- in Gestalt von gegebenenfalls verstärkten Formteilen,
- in Gestalt von Formkörpern aus mit den Mitteln gebundenen, beispielsweise blähfähigen oder aufgeblähten Teilchen von Perlit, Vermikulit, Bims, Tonen, Glas, Graphit usw.,
- in Gestalt von damit beschichteten bzw. imprägnierten Vließen, Geweben, Gewirken, starren oder flexiblen Schaumstoffen, mehr oder weniger saugfähigen Substraten, wie z.B. Glas, Beton, Gips, Holz, Pappe, Kunststoffe usw.,
- als Löschwasserzusatz oder
- als Bauelemente bzw. Bestandteil von Bauelementen für Zwecke des Brandschutzes, sei es für Kabelschotts, Dichtungsmaterialien, Mörtel, Verschluß- oder Füllmassen, Rohrmanschetten, Abdeckungen, Rauchgassperren oder Isolierstoffe verwendet.

Da die erfindungsgemäßen Binde- und Beschichtungsmittel hohe Temperaturbeständigkeiten aufweisen und da sie auch bei hohen Anteilen in Gemischen mit Graphiten, Metallpulvern oder -granulaten deren Leitfähigkeit für Wärme und für elektrischen Strom nur wenig beeinträchtigen, ergeben sich im Apparatebau vielfältige Anwendungsmöglichkeiten, beispielsweise in der Wärme- und Heizungstechnik oder auch für Abschirmungszwecke gegen elektromagnetische Einflüsse bzw. zur Ableitung von unerwünschten Spannungen.

So kann man beispielsweise aus voll expandiertem, blähfähigem Graphit (sogenanntem Blähgraphit) und den erfindungsgemäßen, z.B. in 60 gew.-%iger, wäßriger Lösung vorliegenden Bindemitteln im Feststoffverhältnis 1:1 Mischungen herstellen, diese Mischungen verformen und trocknen sowie bei ca. 270°C tempern. Man erhält dann einen Formling mit einem Raumgewicht unter 500 g/l, der ausgezeichnete elektrische Leitfähigkeiten bei guten mechanischen Festigkeiten aufweist und z.B. in Plattenform als wärmeableitendes Sandwichelement, als elektromagnetisch abschirmendes, Schall- und Feuerdurchtritt verhinderndes, gegebenenfalls noch intumeszenzfähig eingestelltes Bauelement eingesetzt werden kann.

Im folgenden soll die Erfindung beispielhaft erläutert werden. Die angegebenen Teile und Prozente beziehen sich auf das Gewicht, sofern nichts anderes vermerkt ist. Die Oberflächenangaben beziehen sich auf Werte, die nach der BET-Methode bzw. nach der Methode von G.N.Sears ermittelt wurden.

### Beispiele

### Herstellung einer Al-Phosphatlösung (A):

78 Tle (1 Mol) Al(OH)₃ und 196 Tle (2 Mol) Orthophosphorsäure sowie 202 Tle Wasser werden bei 80°C unter gutem Rühren zu einer 50 %igen Lösung gelöst. Dann wird diese Lösung ebenfalls unter intensiver Durchmischung in eine 50%ige Lösung von 3,5 Mol Ethanolamin in Wasser eingetragen und ca. 1 Stunde bei 80°C nachgerührt. Es bildet sich eine weitgehend klare, 50 %ige Lösung des Aluminiumphosphat-ethanolaminsalzes, deren pH-Wert bei ca. 7,5 liegt.

### Beispiel 1

200 Tle der Lösung A werden bei 30°C vorgelegt; dann werden unter intensivem Rühren 200 Tle 30 %iges, handelsübliches Kieselsol mit einer durchschnittlichen Teilchen-Oberfläche von ca. 150 m²/g hinzugegeben. Es bildet sich eine schwach opake, stabile Produktlösung (1), die beim Auftrocknen einen homogenen, nahezu klaren, glasartigen Film ergibt.

Wenn man das getrocknete Material der Flamme eines Bunsenbrenners aussetzt, schäumt es intumeszent auf. Wenn man es dagegen im Heizschrank langsam mit 1°C/min aufheizt, wird auch bei hohen Temperaturen keine Intumeszenz beobachtet.

### Herstellung einer Lösung eines borhaltigen Al-Phosphataminsalzes (B):

692 Tle 85 %ige o-Phosphorsäure (6 Mol), 165 Tle Wasser und 156 Tle Aluminiumhydroxyd (2 Mol) werden bei 80°C unter Rühren zur Lösung gebracht.

Diese Lösung wird anschließend bei 80°C unter intensiver Durchmischung in eine Lösung von 185,4 Tlen B(OH)₃ in 370 Tlen Monoethanolamin eingetragen. Man erhält nach 1 Stunde Nachrühren bei 80°C und anschließendem Abkühlen eine klare, ca. 76 %ige Lösung des borhaltigen Aminsalzes mit einem pH-Wert von ca. 6; diese wird mit Monoethanolamin auf pH 7 eingestellt.

### Beispiel 2

Unter intensiver Vermischung werden in jeweils 100 Tle der ca. 76 %igen Salzlösung B jeweils 100 Tle 30 %iges Kieselsol mit einer Teilchen-Oberfläche von
a) 100 m²/g,
b) 200 m²/g und
c) 300 m²/g
bei Raumtemperatur eingetragen. Es bildet sich jeweils eine stabile, d.h. nicht ausflockende, opake Produktlösung (2a-c).

### Beispiel 3

75 Tle der Lösung B werden wie in Beispiel 2 mit 25 Tlen eines 30 %igen Kieselsols mit einer Teilchen-Oberfläche von ca. 220 m²/g versetzt. Man erhält eine nahezu klare, stabile Produktlösung (3) mit einem Feststoffgehalt von 64,5 %.

### Beispiel 4

50 Tle der Lösung B werden wie in Beispiel 3 mit 50 Tlen des gleichen Kieselsols intensiv vermischt. Man erhält eine schwach opake Produktlösung (4) mit einem Feststoffgehalt von 53 %.

### Beispiel 5

25 Tle der Lösung B werden wie in Beispiel 3 mit 75 Tlen des gleichen Kieselsols intensiv vermischt. Man erhält eine stabile, opake Produktlösung (5) mit einem Feststoffgehalt von 41,5 %.

Die Produktlösungen 3, 4 und 5 trocknen bei 80°C bis 120°C zu nahezu klaren Filmen auf.

### Beispiel 6

Mit der Produktlösung 2a wird ein vernadeltes Baumwollfaservließ (600 m²/g) satt getränkt, danach abgequetscht und das feuchte Material in Streifen von 6 cm Breite geschnitten und in Polyethylenfolie wasserdampfdicht eingeschweißt. Nach 6 Monaten Lagerung entnimmt man das Material der Verpackung und umwickelt damit ein Polypropylenrohr dreilagig. Beim Auftrocknen des Materials (Binden) versteift dieses. Nunmehr wird das Rohr an der Umwickelungsstelle der Beflammung mit einem Erdgasbrenner ausgesetzt. Es zeigt sich, daß an der Umwickelungsstelle die Rohrkonstruktion auch nach 30 Minuten erhalten bleibt, während neben der Umwickelungsstelle das Rohr durch die Wärme abschmilzt.

Derartige Binden auf Basis von Vließen oder Geweben können zur vorbeugenden Stabilisierung von Kunststoffteilen im Brandfalle verwendet werden.

### Beispiel 7

Mit der Produktlösung 1 wird ein Karton satt eingestrichen und die so hergestellte Beschichtung bzw. Imprägnierung aufgetrocknet. Anschließend wird der Karton auf der Beschichtungsseite der Flamme eines Erdgasgebläses ausgesetzt. Der mit der Produktlösung behandelte Karton wird durch die Beflammung nur verkohlt aber nicht zerstört; der Raumabschluß gegen die Flamme bleibt erhalten. Auf diese Weise lassen sich feuerbeständige Kartonagen herstellen.

### Beispiel 8

Mit der Produktlösung 2c wird ein Polyaramid-Gewebe (Kevlargewebe) satt getränkt und bei 100°C getrocknet. Der gleiche Prozeß wird nochmals wiederholt. Das so erhaltene flächig-starre Material besteht nach Trocknung bei 100-160°C zu etwa 50 % aus dem erfindungsgemäßen Bindemittel. Nun wird das plane Material in eine auf 400°C vorgeheizte Presse eingelegt und zu einer halbkugelförmigen Schale verpreßt. Die erhaltene Schale ist widerstandsfähig gegen Flammeneinwirkung und Wasser; sie hat einen keramisch wirkenden Charakter. Dieses Beispiel zeigt die thermoplastische Verformbarkeit der Imprägnierung.

### Beispiel 9

100 Tle Blähgraphit (SOₓ-Typ) werden mit 100 Tlen Produktlösung 2b vermischt und getrocknet. Dann wird der so modifizierte, blähfähige Graphit in eine 1 000 Volumenteile fassende, mit Aluminium-Folie ausgekleidete Plattenform aus Stahlblech gegeben und in einen auf 600°C vorgeheizten Ofen gebracht. Nach 1 Stunde wird die Stahlform dem Ofen entnommen, abgekühlt und geöffnet. Es hat sich eine mechanisch stabile Leichtgraphitplatte mit einem Raumgewicht von ca. 90 g/l gebildet, die ihren Zusammenhalt auch nicht bei 30-minütiger Beflammung mit einem Erdgas-Gebläse verliert. Sie ist elektrisch leitfähig.

### Beispiel 10

Eine Phenolharz-verleimte Sperrholzplatte wird mit der Produktlösung 3 satt beschichtet und bei 120°C bis 150°C getrocknet. Jetzt wird die mit einer etwa 0,5 mm dicken Beschichtung versehene Plattenoberfläche mit einem Erdgasgebläse beflammt. Es bildet sich eine bis zu 10 mm dicke Schicht aus isolierendem und feuerabweisendem Intumeszenzschaum aus, hinter der das Holz gegen Durchbrennen geschützt ist.

### Beispiel 11 (Vergleichsbeispiel)

100 Tle bei 650°C behandelter, d.h. voll expandierter, Blähgraphit werden mit 330 Tlen des in Beispiel 4 und 5 verwendeten Kieselsols vermischt. Danach füllt man die feuchte Masse in eine Ziegelsteinform, trocknet und tempert den erhaltenen Ziegel nach dem Trocknen in einem Ofen mit einem Temperaturanstieg von 1°C/min von Raumtemperatur auf 350°C. Nach dem Tempern erhält man einen Ziegel aus Blähgraphit, der bei bereits leichter mechanischer Belastung, z.B. Drücken mit dem Finger, zerfällt.

### Beispiel 12

Es wird wie in Beispiel 11 beschrieben gearbeitet; man verwendet jedoch anstelle des reinen Kieselsols nunmehr die gleiche Feststoff-Gewichtsmenge (190 Tle) an Produktlösung 4.

Man erhält einen mechanisch stabilen Ziegel mit guter Festigkeit, d.h. Eindruckfestigkeit über 15 kg/cm² bei einem Raumgewicht von ca. 250 g/l, und einem elektrischen Durchgangswiderstand unter 7,8 x 10⁻³ Ohm/cm³.

### Beispiel 13

100 Tle handelsübliche Glashohlperlen mit einem Schüttgewicht von ca. 150 g/l und Korndurchmessern unter 1 mm werden mit 100 Tlen der Produktlösung 5 zu einem Teig vermischt, in eine Ziegelform eingebracht und darin leicht verdichtet. Dann wird bei 120°C getrocknet, der Formkörper entnommen und bei 400°C gebrannt. Man erhält einen stabilen, flammwidrigen und bei Beflammung quasi rauchgasfreien, wasserbeständigen Leichtformkörper mit einem Raumgewicht von ca. 150 g/l, der für Isolations- und Schallabsorptionszwecke geeignet ist.

### Beispiel 14

50 Tle bei 290°C behandelter, also nur teilweise expandierter, SO_{X}-Blähgraphit werden mit 250 Tlen der Produktlösung 4 zu einem Teig angerührt. Dieser Teig ist kartouchengängig und kann in Sicherheitsfugen eingedrückt werden, wo er beim Trocknen erhärtet. Bei Beflammung der so gesicherten Fuge expandiert der enthaltene Blähgraphit, gleichzeitig bildet das Bindemittel ein keramisches Stabilisierungsgerüst.

Auch nach vierstündiger Beflammung nach der Einheitstemperaturkurve gemäß DIN 4102 behält eine 3 cm breite und 3 cm tief gefüllte Fuge den Raumabschluß.

### Beispiel 15

Aus dem nach Beispiel 12 erhaltenen, ausgetemperten Ziegel wird eine 2 cm dicke Scheibe geschnitten. Diese Scheibe wird mit 2 jeweils 1 mm dicken Platten aus Aluminiumoxydkeramik abgedeckt. Die Auflageseiten der beiden Deckplatten wurden zuvor mit der Produktlösung 3 eingestrichen. Der so erhaltene Sandwich wurde dann in einer beheizbaren Presse 30 min auf 260°C erhitzt, wodurch die keramischen Deckplatten fixiert wurden. Der so erhaltene Sandwich hat eine elektrisch leitfähige, leichte Innenlage und zwei isolierende Deckschichten. Er ist als Bauelement für Zwecke der elektromagnetischen Abschirmung geeignet.

### Beispiel 16

100 Tle getempertes Aluminiumoxydpulver, wie es für oxydkeramische Zwecke handelsüblich ist, werden mit 30 Tln Lösung aus Beispiel 2 c zu einem Teig verknetet und zu einer Platte verformt.

Diese Platte wird bei 120°C getrocknet und dann mit einer Temperatursteigung von 1°C/Min auf 300°C erhitzt. Man erhält eine quasi keramische, stabile Platte, die für elektrische Isolationszwecke oder als Basisplattenmaterial für elektronische Bauelemente Verwendung finden kann.

### Beispiel 17

Ein dichtes Glasfasergewebe in Leinenbildung wird zweimal mit der Lösung aus Beispiel 2c satt getränkt und bei 150°C getrocknet. Dann wird der so erhaltene Vorformling in einer beheizten Plattenpresse bei ca. 100 bar und 300°C 30 Min verpresst. Man erhält eine stabile, quasi keramische Platte, die als Basismaterial für die Montage von elektrischen Bauelementen verwendet werden kann.

Die nach den Beispielen 16 und 17 erhaltenen Platten können durch Temperung bei 1200°C an Luft noch weiter keramisiert werden. Man erhält ein farbloses Material, das ebenfalls als Bauelement im Elektrobereich eingesetzt werden kann.

## Patentansprüche

1. Filmbildende, lagerstabile, klar auftrocknende Binde- und Beschichtungsmittel, erhältlich durch Vermischen
i) wäßriger Sole kolloidaler Kieselsäuren, deren Kieselsäure spezifische Oberflächen bestimmt nach der BET-Methode von 50 bis 500 m²/g aufweisen mit
ii) vorgelegten wäßrigen Lösungen von Ammonium-, Hydrazin-, primären, sekundären oder tertiären, wasserlöslichen Amin- oder aliphatischen Alkanolaminsalzen saurer Metallphosphate oder von Gemischen dieser Salze mit Borsäure.

2. Verfahren zur Herstellung von Binde- und Beschichtungsmitteln, erhältlich nach Anspruch 1, dadurch gekennzeichnet, daß wäßrige Kieselsäuresole intensiv mit wäßrigen, 25 bis 85 gew.-%igen Lösungen aus Ammonium-, Hydrazin-, primären, sekundären oder tertiären, wasserlöslichen Amin- oder aliphatischen Alkanolaminsalzen saurer Metallphosphate oder aus Gemischen dieser Salze mit Borsäure vermischt werden.

3. Verfahren zur Herstellung von Binde- und Beschichtungsmitteln, gemäß Anspruch 2, dadurch gekennzeichnet, daß wäßrige Kieselsäuresole mit Feststoffkonzentration von 10 bis 55 Gew.-% eingesetzt werden.

4. Verfahren zur Herstellung von Binde- und Beschichtungsmitteln gemäß der Ansprüche 2 und 3, dadurch gekennzeichnet, daß als Metallphosphate saure Phosphate von Metallen der 2. und 3. Hauptgruppe sowie der 2. Nebengruppe des Periodensystems der Elemente eingesetzt werden.

5. Verfahren zur Herstellung von Binde- und Beschichtungsmitteln gemäß der Ansprüche 2 bis 4, dadurch gekennzeichnet, daß der Feststoffgehalt der Binde- und Beschichtungsmittel zwischen 20 und 70 Gew.-% liegt.

6. Verfahren zur Herstellung von Klebstoffen, dadurch gekennzeichnet, daß man Binde- und Beschichtungsmittel gemäß Anspruch 1 auf faserige, kugelige, plättchen-, hantel-, kristall- oder pulverförmige, massive oder poröse, stückige, hohlkörperartige, schaumstoffartige oder flächige, organische, anorganische oder mineralische Teilchen oder Teile einwirken läßt.

7. Verfahren zur Herstellung eines Binders für expandierbare oder expandierte Teilchen, dadurch gekennzeichnet, daß man Binde- und Beschichtungsmittel gemäß Anspruch 1 auf Metalle, Kohle, Graphit, blähfähigem Graphit, Ton, Perlit, Vermikulit, Glas, Glimmer, Borsilikat, Holz, Kork, Fruchtkörner, Fruchtschalen, Stärkeprodukte, Eiweißprodukte oder synthetische Cellulosezubereitungen einwirken läßt.

8. Verfahren zur Herstellung von verdichteten oder gepreßten Formteilen oder von nichtverdichteten oder nichtgepreßten Formteilen, dadurch gekennzeichnet, daß man Binde- und Beschichtungsmittel gemäß Anspruch 1 auf die genannten Formteile einwirken läßt, anschließend trocknet und nacherhitzt oder nicht nacherhitzt.

## Claims

1. Film-forming, clear-drying bonding and coating materials which are stable in storage, obtainable by mixing
i) aqueous sols of colloidal silicas, the said silicas having specific surfaces, determined by the BET method, of from 50 to 500 m²/g, into
ii) aqueous solutions of ammonium salts, hydrazine salts, primary, secondary or tertiary water-soluble amine salts or aliphatic alkanolamine salts of acid metal phosphates or of mixtures of these salts with boric acid.

2. A process for the preparation of bonding and coating materials obtainable according to claim 1, characterised in that aqueous silica sols are mixed intensively with aqueous, 25 to 85 wt.% solutions of ammonium salts, hydrazine salts, primary, secondary or tertiary water-soluble amine salts or aliphatic alkanolamine salts of acid metal phosphates or of mixtures of these salts with boric acid.

3. A process for the preparation of bonding and coating materials according to claim 2, characterised in that aqueous silica sols having a solids content of 10 to 55 wt.% are used.

4. A process for the preparation of bonding and coating materials according to claims 2 or 3, characterised in that acid phosphates of metals or the second and third main groups and of the second subgroup of the periodic table of elements are used as metal phosphates.

5. A process for the preparation of bonding and coating materials according to claims 2 to 4, characterised in that the solids content of the bonding and coating materials is between 20 and 70 wt.%.

6. A process for the preparation of adhesives,
characterised in that bonding and coating materials according to claim 1 are allowed to work into organic, inorganic or mineral particles or parts which may be filamentous, spherical, flaky, dumb-bell shaped, crystalline or pulverulent, solid or porous, in lump form, hollow, foamed or in sheets.

7. A process for the preparation of a binder for expandable or expanded particles, characterised in that bonding and coating materials according to claim 1 are allowed to work into metals, carbon, graphite, expanded graphite, clay, perlite, vermiculite, glass, mica, borosilicate, wood, cork, seeds and peels of fruit, starch products, protein products or synthetic cellulose formulations.

8. A process for the production of compacted or pressed mouldings or of uncompacted or unpressed mouldings, characterised in that bonding and coating materials according to claim 1 are allowed to work into the said mouldings, then dried and reheated or not reheated.

## Revendications

1. Liants et produits de revêtement filmogènes, stables à la conservation, restant transparents au séchage, qu'on obtient en mélangeant
i) des sols aqueux de silices colloïdales dont les surfaces spécifiques, déterminées par la méthode BET, va de 50 à 500 m²/g, avec
ii) des solutions aqueuses de sels d'ammonium, d'hydrazine, d'amines primaires, secondaires ou tertiaires solubles dans l'eau ou d'alcanolamines aliphatiques et de phosphates métalliques acides ou de mélanges de ces sels avec l'acide borique.

2. Procédé de préparation de liants et produits de revêtement selon la revendication 1, caractérisé en ce que l'on soumet des sols aqueux de silice à mélange intensif avec des solutions aqueuses, à des concentrations de 25 à 85 % en poids, de sels d'ammonium, d'hydrazine, d'amines primaires, secondaires ou tertiaires solubles dans l'eau ou d'alcanolamines aliphatiques et de phosphates métalliques acides ou de mélanges de ces sels avec de l'acide borique.

3. Procédé de préparation des liants et produits de revêtement selon la revendication 2, caractérisé en ce que l'on utilise des sols aqueux de silice à des concentrations en matières solides de 10 à 55 % en poids.

4. Procédé de préparation de liants et produits de revêtement selon les revendications 2 et 3, caractérisé en ce que l'on utilise en tant que phosphates métalliques des phosphates acides de métaux du deuxième et du troisième groupe principal et du deuxième sous-groupe de la classification périodique des éléments.

5. Procédé de préparation de liants et produits de revêtement selon les revendications 2 à 4, caractérisé en ce que la teneur en matières solides des liants et produits de revêtement va de 20 à 70 % en poids.

6. Procédé de préparation d'adhésifs, caractérisé en ce que l'on fait agir des liants et produits de revêtement selon la revendication 1 sur des particules ou parties organiques, inorganiques ou minérales fibreuses, à l'état de sphérules, en plaquettes, en haltères, à l'état de cristaux ou de poudre, massifs ou poreux, en morceaux, sous forme de corps creux, de mousses ou planiformes.

7. Procédé de préparation d'un liant pour particules expansables ou expansées, caractérisé en ce que l'on fait agir des liants et produits de revêtement selon la revendication 1 sur des métaux, du charbon, du graphite, du graphite gonflable, de l'argile, de la perlite, de la vermiculite, du verre, du mica, un borosilicate, du bois, du liège, des graines végétales, des coques de fruits, des dérivés de l'amidon, des produits albuminoïdes ou des compositions cellulosiques synthétiques.

8. Procédé pour la fabrication de pièces moulées alourdies ou comprimées ou de pièces moulées non alourdies ou non comprimées, caractérisé en ce que l'on fait agir des liants et produits de revêtement selon la revendication 1 sur les pièces moulées en question puis on sèche et on recuit ou non.
